# EUROPÄISCHE PATENTSCHRIFT

(11) **EP 3 071 850 B1**
(45) Veröffentlichungstag und Bekanntmachung des Hinweises auf die Patenterteilung: **18.07.2018**
(21) Anmeldenummer: 14777590.2
(22) Anmeldetag: 30.09.2014
(51) Int. Cl.: F16C 19/52, F16C 41/00

(54) **RADLAGERANORDNUNG MIT TEMPERATURMESSEINRICHTUNG**
WHEEL BEARING ARRANGEMENT COMPRISING A TEMPERATURE MEASURING DEVICE
DISPOSITIF DE ROULEMENT DE ROUE COMPRENANT UN DISPOSITIF DE MESURE DE TEMPÉRATURE

(30) Priorität: 18.11.2013 DE 102013223436
(43) Veröffentlichungstag der Anmeldung: 28.09.2016
(73) Patentinhaber: SAF-HOLLAND GmbH, 63856 Bessenbach (DE)
(72) Erfinder: WALLMEIER, Stefan, 63773 Goldbach (DE); WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2014/070852
(87) Internationale Veröffentlichungsnummer: WO 2015/071022

(56) Entgegenhaltungen:
- DE-A1- 2 638 416
- DE-U1-202007 004 159
- JP-A- 2009 216 230
- US-A- 3 877 411
- US-A1- 2012 032 793

## Beschreibung

Die Erfindung betrifft eine Radlageranordnung gemäß dem Oberbegriff des Anspruchs 1.

Die Temperaturentwicklung eines Radlagers ist ein wesentlicher Indikator für den Funktionszustand des Lagers. So kündigt sich der Ausfall eines Radlagers häufig durch einen Temperaturanstieg an. Eine regelmäßige Kontrolle der Temperatur des Radlagers ist somit ein geeignetes Mittel, die Funktionsfähigkeit und damit die Betriebssicherheit des Radlagers zu überprüfen.

Eine Möglichkeit zur Überwachung der Temperatur eines Radlagers besteht darin, an dem Radlager einen Temperatursensor vorzusehen, welcher ein Temperatursignal an eine Anzeigeeinrichtung im Cockpit des Fahrzeugs sendet. Beispielsweise kann die Temperatur durch einen Widerstand gemessen werden, der seine Leitfähigkeit temperaturabhängig ändert. Derartige Temperaturmesssysteme haben sich in Anhängerfahrzeugen jedoch nicht durchgesetzt. Gründe hierfür sind zum einen eine aufwändige Infrastruktur. Zum anderen ist das Messen an umlaufenden Teilen mit einer Kabelführung aufwändig.

Eine weitere bekannte Methode zur Feststellung einer Überhitzung in einem Radlager besteht in der Verwendung eines Temperaturaufklebers, welcher bei Erreichen einer definierten Temperatur seine Einfärbung irreversibel verändert. Auf diese Weise lässt sich feststellen, ob das Radlager in der Vergangenheit eine bestimmte Temperatur überschritten hat.

Die US 2012/0032793 A1 betrifft einen Temperaturindikator, welcher eine Mehrzahl von thermochromischen Pigmenten aufweist, die ihre Farbe bei unterschiedlichen Temperaturen ändern.

Die US 3,877,411 betrifft einen Temperaturindikatorbolzen, an dessen Bolzenkopf ein Indikatorelement angeordnet ist.

Die DE 26 38 416 A1 betrifft eine Anzeigevorrichtung, welche die Erreichung eines Temperaturgrenzwertes anzeigt, mit einem bei einer bestimmten Grenztemperatur physikalisch reagierenden Element, welches die Anzeige auslöst.

Die JP 2009 216230 A betrifft eine Temperaturanzeigevorrichtung an einem Radlager, welche aus einem blattartigen, auf dem äußeren Lagerring angeordneten Material ausgebildet ist.

Die DE 20 2007 004 159 U1 betrifft eine Vorrichtung zur Überwachung der Betriebstemperatur eines Lagers mit einem temperatursensitiven Element, das im Bereich des Lagers angeordnet ist und das in Abhängigkeit von der Temperatur seine Farbe ändert.

Eine Temperaturüberwachung eines Radlagers mittels eines Thermopunktes ist beispielsweise aus der DE 102 42 199 A1 bekannt.

Der Erfindung liegt die Aufgabe zugrunde, eine Radlageranordnung zur Verfügung zu stellen, bei dem eine Überhitzung einfach, kostengünstig und aussagekräftig, aber auch besonders präzise festgestellt werden kann.

Die Aufgabe wird erfindungsgemäß durch eine Radlageranordnung mit den Merkmalen des Anspruchs 1 gelöst. Bevorzugte Ausgestaltungen der Erfindung sind in den abhängigen Ansprüchen sowie der nachfolgenden Beschreibung, insbesondere im Zusammenhang mit den beiliegenden Figuren, angegeben.

Die Radlageranordnung, insbesondere Nutzfahrzeugradlageranordnung, umfasst erfindungsgemäß eine Radnabe, die über mindestens ein Radlager an einem Achselement gelagert ist, sowie eine von außerhalb der Radlageranordnung sichtbare Temperaturmesseinrichtung zur Messung und Anzeige der Überschreitung einer Grenztemperatur in dem Radlager. Erfindungsgemäß ist vorgesehen, dass die Temperaturmesseinrichtung mindestens zwei separate Temperaturmesselemente aufweist, welche jeweils mit dem Radlager über bzw. entlang einer Wärmeleitungsstrecke wärmeleitend verbunden sind und bei einer vorbestimmten Auslösetemperatur eine visuell erkennbare Veränderung vollziehen, wobei die mindestens zwei Temperaturmesselemente so angeordnet sind, dass sie sich bei einer Erwärmung des Radlagers unterschiedlich schnell erwärmen und/oder wobei die Temperaturmesselemente unterschiedliche Auslösetemperaturen aufweisen.

Durch die erfindungsgemäße Radlageranordnung ist es möglich, nicht nur eine maximale Spitzentemperatur angezeigt zu bekommen, sondern es ist erkennbar, ob die Spitzentemperatur nur kurzfristig vorhanden war oder über einen längeren Zeitraum vorlag.

Gemäß einem ersten Aspekt der Erfindung werden hierzu die mindestens zwei räumlich voneinander getrennten Temperaturmesselemente so positioniert und/oder so über die Wärmeleitungsstrecken mit dem Radlager verbunden, dass eine Temperaturerhöhung in dem Radlager unterschiedlich schnell zu den Temperaturmesselementen übertragen wird. Eine erhöhte Temperatur des Radlagers wird also zu einem der Temperaturmesselemente schneller übertragen als zu dem anderen. Liegt die erhöhte Temperatur nur kurzzeitig vor, so wird die vorgegebene Auslösetemperatur der Temperaturmesselemente nur in einem der Temperaturmesselemente erreicht. Das andere Temperaturmesselement, zu welchem die Temperatur langsamer übertragen wird, reagiert in diesem Fall nicht. Liegt hingegen die überhöhte Temperatur des Radlagers über einen längeren Zeitraum vor, so erreicht auch das zweite Temperaturmesselement seine Auslösetemperatur. Damit liefert die erfindungsgemäße Radlageranordnung mit den separaten, unterschiedlich positionierten Temperaturmesselementen eine Information über die Zeitdauer, während welcher die vorgegebene Grenztemperatur in dem Radlager überschritten wurde. Hat die Grenztemperatur nur kurz vorgelegen, so löst nur eines der Temperaturmesselemente aus. Liegt die Grenztemperatur über einen längeren Zeitraum vor, lösen beide Temperaturmesselemente aus. Vorzugsweise sind die Temperaturmesselemente so positioniert, dass der zeitliche Abstand des Erreichens der Auslösetemperatur im Bereich von Minuten oder Stunden liegt, beispielsweise mindestens 5 Minuten, mindestens 10 Minuten, mindestens 30 Minuten oder mindestens eine Stunde.

Der Erfindung liegt die Erkenntnis zugrunde, dass eine Erhöhung der Radlagertemperatur zunächst eine Erwärmung des das Radlager umgebenden Körpers (beispielsweise der Radnabe), also eine Speicherung von Wärmeenergie (Enthalpie) in dem Körper, zur Folge hat. In dem Körper findet instationäre Wärmeleitung statt, bei welcher ein zeitlich sich ändernder Wärmestrom von dem Radlager zu einer Oberfläche der Radlageranordnung fließt. Von der Oberfläche wird die Wärme schließlich durch Wärmeübergang an die Umgebung abgegeben. Während der instationären Wärmeleitung ist die Temperatur in dem Körper abhängig von der Zeit. Die Temperatur an der Oberfläche der Radlageranordnung ändert sich dementsprechend ebenfalls mit der Zeit. Die instationäre Wärmeleitung findet statt, bis gegebenenfalls ein stationärer, also zeitlich unabhängiger Zustand, erreicht ist, bei welchem sich die Temperaturen zeitlich nicht mehr ändern und ein konstanter Wärmestrom von dem Radlager zur Umgebung stattfindet.

Zumindest ein Teil der in dem Radlager entstehenden Wärme wird erfindungsgemäß über die Wärmeleitungsstrecken zu den Temperaturmesselementen geleitet. Je mehr Energie in einer Wärmeleitungsstrecke gespeichert werden kann, beispielsweise aufgrund ihrer Materialeigenschaften oder ihres Volumens bzw. ihrer Länge, desto langsamer erfolgt die Durchwärmung, also das Weiterleiten der Temperaturerhöhung. Diese Erkenntnis macht sich die Erfindung zunutze, indem sie unterschiedliche Wärmeleitungsstrecken vorsieht, welche eine verzögerte Erwärmung eines der Temperaturmesselemente gegenüber dem anderen Temperaturmesselement bewirken. Eine Temperaturerhöhung an einem ersten Ende der ersten Wärmeleitungsstrecke und eine gleiche Temperaturerhöhung an einem ersten Ende der zweiten Wärmeleitungsstrecke führt zu jeweils verzögerten Temperaturerhöhungen an einem zweiten Ende der ersten Wärmeleitungsstrecke und an einem zweiten Ende der zweiten Wärmeleitungsstrecke, wobei die Verzögerungen unterschiedlich sind. Die ersten Enden der Wärmeleitungsstrecken sind insbesondere dem Achslager zugewandt, während die zweiten Enden der Wärmeleitungsstrecken den Temperaturmesselementen zugewandt sind.

Die zeitliche Änderung der Temperatur in einem Volumenelement eines Körpers hängt insbesondere und unter anderem von der Temperaturleitfähigkeit des Körpers ab. Die Temperaturleitfähigkeit ist dabei definiert als der Quotient aus der Wärmeleitfähigkeit λ und dem Produkt aus Dichte ρ und spezifischer Wärmekapazität bei konstantem Druck cₚ: a = λ/(ρ x Cₚ)

Eine Erwärmung des Radlagers führt zu einer Erwärmung des das Radlager umgebenden Körpers bzw. Materials, also einer Speicherung von Wärme in dem Körper. Je größer die Wärmeleitfähigkeit λ des Körpers und je geringer dessen Dichte ρ und Wärmekapazität cₚ, desto schneller wird die Temperaturerhöhung durch den Körper weitergegeben.

Die Geschwindigkeit, mit welcher eine Temperaturänderung in dem Radlager zu den Temperaturmesselementen weitergegeben wird, hängt darüber hinaus von der Länge der Wärmeleitungsstrecke zwischen dem Radlager und dem Temperaturmesselement ab. Je länger die Wärmeleitungsstrecke, desto mehr Wärme kann in der Wärmeleitungsstrecke gespeichert werden, desto länger dauert es folglich, bis sich die Temperatur des Temperaturelements bis auf einen stationären Temperaturwert erhöht hat.

Es ist daher ein erfindungsgemäßer Aspekt, dass sich die Temperaturmesselemente bei einer Erwärmung des Radlagers aufgrund unterschiedlicher Wärmespeicherfähigkeiten der Wärmeleitungsstrecken unterschiedlich schnell erwärmen.

Gemäß einem zweiten Aspekt der Erfindung lösen die Temperaturmesselemente bei unterschiedlichen Temperaturen aus. Dem liegt die Erkenntnis zugrunde, dass bei einer nur kurzzeitigen Überschreitung der Grenztemperatur in dem Radlager kein stationärer Zustand erreicht wird und somit die Temperatur an den Temperaturmesselementen geringer ist als im stationären Zustand, also nachdem die erhöhte Lagertemperatur (Grenztemperatur) über eine längere Zeitdauer vorgelegen hat. Liegt mindestens eine der Auslösetemperaturen unterhalb der der Grenztemperatur des Radlagers entsprechenden stationären Temperatur am Ort des Temperaturmesselements, so wird diese Temperatur bereits vor Erreichen des stationären Zustands, das heißt nach relativ kurzer Zeit, erreicht. Das Temperaturmesselement löst in diesem Fall aus. Wenn die Auslösetemperatur des zweiten Temperaturmesselements über der Auslösetemperatur des ersten Temperaturmesselements liegt, insbesondere gleich der stationären Temperatur am Ort des Temperaturmesselements ist, welche der vorgegebenen Grenztemperatur zugeordnet ist, so löst das zweite Temperaturmesselement erst aus, wenn die Grenztemperatur länger vorgelegen hat. Damit liefern die unterschiedlichen Auslöstemperaturen der Temperaturmesselemente ebenfalls eine Information über die Zeitdauer, während welcher die vorgegebene Grenztemperatur in dem Radlager vorgelegen hat oder überschritten wurde.

Ein Grundgedanke der Erfindung kann demnach darin gesehen werden, durch Anordnung von mindestens zwei separaten Temperaturmesselementen, welche jeweils nur das Überschreiten einer vorbestimmten Auslösetemperatur anzeigen, eine Information über die Zeitdauer des Vorliegens oder Überschreitens einer Grenztemperatur in dem Radlager zu erhalten. Die Auslösetemperaturen sind hierzu so gewählt, dasss bei einer vorgegebenen Grenztemperatur des Radlagers, bei dessen längerer Überschreitung eine Schädigung des Radlagers angenommen wird, das Temperaturmesselement erst nach Ablauf der kritischen Überschreitungsdauer auslöst, während das andere Temperaturmesselement bereits früher auslöst. Die kritische Überschreitungsdauer beträgt beispielsweise mindestens 5 Minuten, mindestens 10 Minuten, mindestens 30 Minuten oder mindestens eine Stunde.

Gemäß einer Ausführungsform der Erfindung weisen mindestens zwei der Wärmeleitungsstrecken unterschiedliche Temperaturleiteigenschaften auf, so dass die Wärme von dem Radlager unterschiedlich schnell zu den entsprechenden Temperaturmesselementen geleitet wird. Des Weiteren weisen vorzugsweise mindestens zwei der Temperaturmesselemente unterschiedliche Auslösetemperaturen auf, um eine Temperaturerhöhung auf eine über der Grenztemperatur liegende Temperatur nachzuweisen. Hierdurch kann angezeigt werden, dass eine erste Grenz- oder Auslösetemperatur über einen längeren Zeitraum überschritten wurde. Darüber hinaus kann dadurch angezeigt werden, dass eine zweite Grenz- oder Auslösetemperatur, die höher als die erste Grenz- oder Auslösetemperatur ist, - auch über einen kürzeren Zeitraum - überschritten wurde.

In einer bevorzugten Ausführungsform sind die Temperaturmesselemente eingerichtet, bei Erreichen ihrer jeweiligen Auslösetemperatur einen, insbesondere irreversiblen, Farbwechsel zu vollziehen bzw. vorzunehmen. Solche auch als Thermopunkte bezeichnete Temperaturmesselemente sind grundsätzlich bekannt und können beispielsweise auf dem Prinzip des Abschmelzens einer eingefärbten Schicht bei einer bestimmten Temperatur basieren. Grundsätzlich können aber auch andere sichtbare Eigenschaftsänderungen vorgesehen sein, wie beispielsweise eine Verformung der Temperaturmesselemente.

Die unterschiedlich schnelle Temperaturleitung zwischen dem Radlager und dem Temperaturmesselement kann in einer bevorzugten Ausführungsform der Erfindung dadurch gewährleistet werden, dass die Wärmeleitungsstrecken unterschiedliche Längen aufweisen. Beispielsweise kann eines der Temperaturmesselemente weiter entfernt von dem Radlager positioniert sein als das andere und/oder die unterschiedlichen Längen können durch unterschiedliche, insbesondere zumindest teilweise gekrümmte Verläufe der Wärmeleitungsstrecken erreicht werden. Eines der Temperaturmesselemente kann beispielsweise an einem Bereich einer Außenfläche der Radlageranordnung positioniert sein, dessen Entfernung von dem Radlager größer ist als die Entfernung derjenigen Außenfläche, an welchem das andere Temperaturmesselement angebracht ist. Zusätzlich oder alternativ kann zumindest eine nicht-geradlinige Wärmeleitungsstrecke vorgesehen sein.

Die unterschiedliche Temperatur- und/oder Wärmeleitung kann auch dadurch erzielt werden, dass die Wärmeleitungsstrecken unterschiedliche Temperaturleitfähigkeiten aufweisen. Dies kann insbesondere dadurch erreicht werden, dass die Wärmeleitungsstrecken unterschiedliche Wärmeleitfähigkeiten und/oder unterschiedliche Dichten und/oder unterschiedliche Wärmekapazitäten aufweisen. Insbesondere können die Wärmeleitungsstrecken unterschiedliche Temperaturleitkoeffizienten aufweisen. Zur Bereitstellung unterschiedlicher Temperaturleitfähigkeiten können die Wärmeleitungsstrecken aus unterschiedlichen Materialien gebildet sein oder unterschiedliche Materialien aufweisen.

In einer weiteren bevorzugten Ausführungsform ist mindestens eines der Temperaturmesselemente an einer Oberfläche der Radnabe angeordnet. Die Wärmeleitstrecke kann hierbei beispielsweise durch die Radnabe selbst gebildet sein. Vorzugsweise sind beide Temperaturmesselemente im Bereich der Oberfläche der Radnabe angeordnet, wobei zwischen dem Radlager und den Temperaturmesselementen aufgrund unterschiedlicher Wärmeleitstrecken, insbesondere unterschiedlicher Längen der Wärmeleitstrecken, eine unterschiedliche Geschwindigkeit der Temperaturübertragung auf das Temperaturmesselement erzielt wird.

In einer weiteren bevorzugten Ausführungsform kann eines der Temperaturmesselemente an einem vorstehenden Wärmespeicherelement, insbesondere einem an der Radnabe ausgebildeten Vorsprung, angeordnet sein. Das Durchwärmen des insbesondere im Vergleich zur angrenzenden Oberfläche vorstehenden Wärmespeicherelements führt dazu, dass das entsprechende Temperaturmesselement langsamer erwärmt wird als das andere Temperaturmesselement, welches insbesondere nicht an diesem Wärmespeicherelement angeordnet ist. Das Durchwärmen des Wärmespeicherelements stellt also den interessierenden Zeitfaktor dar. Das Wärmespeicherelement bzw. der Vorsprung kann beispielsweise durch ein an der Radnabe vorhandenes Kühlelement, beispielsweise eine Kühlrippe, gebildet sein. Wird eines der Temperaturmesselemente an einem solchen Kühlelement angeordnet, so kann das Prinzip der Erfindung auf besonders einfache und kostengünstige Weise, auch bei vorhandenen Radlageranordnungen, realisiert werden. Eine Kühlrippe stellt zudem eine vergrößerte Wärmeübergangsfläche bereit, so dass auch aus diesem Grund an deren Oberfläche eine niedrigere Temperatur vorliegen kann als abseits der Kühlrippe.

Für eine besonders präzise Ermittlung der Temperatur in dem Radlager sind erfindungsgemäß die Wärmeleitungsstrecken durch separate Wärmeleitelemente gebildet. Unter separaten Wärmeleitelementen sind insbesondere gegeneinander abgegrenzte und räumlich getrennte Elemente zu verstehen. Zwischen dem Radlager und dem ersten Temperaturmesselement ist also ein erstes Wärmeleitelement und zwischen dem Radlager und dem zweiten Temperaturelement ein separates, von dem ersten Wärmeleitelement abgegrenztes, zweites Wärmeleitelement angeordnet. Auf diese Weise erfolgt die Wärmeübertragung von dem Radlager zu dem jeweiligen Temperaturmesselement gezielt entlang eines definierten Wärmeleitelements, welches vorzugsweise das Radlager direkt mit dem Temperaturmesselement verbindet. Äußere Einflüsse, wie beispielsweise eine Wärmeentwicklung in einem Bereich außerhalb des Radlagers, werden somit weitgehend abgeschirmt. Die Wärmeleitelemente weisen vorzugsweise eine Wärme- und/oder Temperaturleitfähigkeit auf, welche sich von der Wärmeleitfähigkeit bzw. Temperaturleitfähigkeit des sie umgebenden Materials unterscheidet, beispielsweise größer ist als die Wärmeleitfähigkeit bzw. Temperaturleitfähigkeit des sie umgebenden Materials. Vorzugsweise sind die Wärmeleitelemente aus Metall gebildet. Die Wärmeleitelemente weisen vorzugsweise eine Wärmeleitfähigkeit von mindestens 80 W/(m²K), besonders bevorzugt mindestens 200

W/(m²K) auf. Für eine definierte Wärmeleitung entlang der Wärmeleitelemente können die Wärmeleitelemente gegenüber ihrer unmittelbaren Umgebung, beispielsweise der Radnabe, isoliert sein. Dies kann in einer Ausführungsform der Erfindung durch einen die Wärmeleitelemente umgebenden Luftspalt oder Luftraum erfolgen. Die eigenständigen Wärmeleitelemente können in einer Ausführungsform der Erfindung von dem Radlager durch die Radnabe zu einer Außenseite der Radnabe hindurchgeführt sein. Die Wärmeleitelemente sind hierbei insbesondere von der Radnabe abgegrenzte Elemente.

Vorzugsweise ist mindestens eines der Temperaturmesselemente direkt mit einem der Wärmeleitelemente, insbesondere seinem zugeordneten Wärmeleitelement, verbunden. Das Temperaturmesselement ist also vorzugsweise direkt auf eine Oberfläche des zugeordneten Wärmeleitelements aufgebracht. Das Wärmeleitelement greift vorzugsweise direkt an einer Außenseite des zu überwachenden Radlagers an, so dass ein definierter Zusammenhang zwischen der Temperatur des Radlagers und der am Temperaturmesselement anliegenden Temperatur besteht. Besonders bevorzugt ist es, dass das Wärmeleitelement mit einer Außenseite des Radlagers, beispielsweise einem äußeren Lagerring, verbunden oder gekoppelt ist und die Wärme in einen äußeren Bereich der Radlageranordnung führt, wo die Temperatur mittels der Temperaturmesselemente erfasst wird. Vorzugsweise sind beide Temperaturmesselemente und Wärmeleitelemente auf diese Weise angeordnet.

Eine vorteilhafte Ablesemöglichkeit der Temperaturmesselemente kann dadurch erreicht werden, dass mindestens eines der Temperaturmesselemente im Bereich der Außenseite einer mit der Radnabe vorzugsweise lösbar verbundenen Radkappe angeordnet ist. Die Radkappe bietet eine ausreichende Fläche zur Anordnung mehrerer Temperaturmesselemente und ist von außen gut sichtbar. Um Wärme von dem Radlager an die Außenseite der Radkappe zu übertragen, ist vorzugsweise zwischen dem Radlager und der Radkappe mindestens ein Wärmeleitelement angeordnet, welches vorzugsweise aus Metall gebildet ist. Das Wärmeleitelement ist vorzugsweise von einer Außenseite des Radlagers zur Radkappe geführt, wobei es zwischen dem Radlager und der Radkappe von einer isolierenden Luftschicht umgeben sein kann. Vorzugsweise ist das Wärmeleitelement von einer Innenseite der Radkappe durch die Radkappe zu einer Außenseite der Radkappe hindurchgeführt, um die Temperatur definiert zu dem an der Außenseite der Radkappe angeordneten Temperaturmesselement zu übertragen. Vorteilhafterweise sind mindestens zwei Temperaturmesselemente im Bereich der Außenseite der Radkappe angeordnet und durch unterschiedliche Wärmeleitelemente wärmeleitend mit dem Radlager verbunden.

Insbesondere in diesem Zusammenhang ist es bevorzugt, dass mindestens eines der Wärmeleitelemente ein Federelement umfasst. Auf diese Weise kann das Wärmeleitelement unterschiedliche Distanzen zu der Radkappe überbrücken. Das Federelement kann beispielsweise als integraler Bestandteil einer Radkappe mit dieser verbunden sein, um sich beim Aufsetzen der Radkappe auf die Radnabe bzw. das Rad des Fahrzeugs an einen Temperaturmesspunkt, insbesondere das zu überwachende Radlager, anzulegen.

In einer bevorzugten Ausgestaltung sind die Temperaturmesselemente an unterschiedlichen Elementen der Radlageranordnung angeordnet. Auf diese Weise ergeben sich automatisch unterschiedliche Wärmeleitungsstrecken zwischen dem Radlager und den entsprechenden Temperaturmesselementen. Bei den unterschiedlichen Elementen der Radlageranordnung kann es sich beispielsweise um ein Achselement bzw. einen Achsstummel, die Radnabe oder die Radkappe handeln. Beispielsweise kann ein erstes Temperaturmesselement an der Radnabe und ein zweites Temperaturmesselement an der Radkappe oder dem Achselement angeordnet sein.

In einer weiteren bevorzugten Ausführungsform ist zumindest eines der Wärmeleitelemente zwischen dem Achselement und der Radkappe angeordnet. Das Wärmeleitelement kann hierbei insbesondere eine Feder sein. Im Bereich der Radkappe ist vorzugsweise ein Schleifkontakt gebildet. Dies ermöglicht die Drehung der Radkappe relativ zu dem ortsfesten Wärmeleitelement.

In einer weiteren bevorzugten Ausführungsform sind mindestens drei Temperaturmesselemente und drei entsprechend zugeordnete Wärmeleitungsstrecken vorgesehen. Eine einem ersten Temperaturmesselement zugeordnete, erste Wärmeleitungsstrecke weist eine unterschiedliche Temperaturleiteigenschaft auf als eine einem zweiten Temperaturmesselement zugeordnete, zweite Wärmeleitungsstrecke. Ein drittes Temperaturmesselement weist eine unterschiedliche Auslösetemperatur auf als mindestens das erste oder das zweite Temperaturmesselement. Auf diese Weise lässt sich nicht nur feststellen, ob eine erhöhte Lagertemperatur über einen längeren Zeitraum vorgelegen hat, sondern es lässt sich darüber hinaus eine Aussage über die Höhe der Temperatur treffen. Insbesondere kann gegebenenfalls unterschieden werden, ob die vorgegebene Grenztemperatur des Radlagers länger vorgelegen hat oder ob die Grenztemperatur, gegebenenfalls auch nur kurzfristig, erheblich überschritten wurde. Beispielsweise könnten die Temperaturmesselemente mit unterschiedlichen zugeordneten Wärmeleitungsstrecken und gegebenenfalls gleichen Auslösetemperaturen auch dann beide auslösen, wenn eine erhebliche Überschreitung der Grenztemperatur in dem Radlager nur kurzzeitig vorgelegen hat. In diesem Fall würde zusätzlich das dritte Temperaturmesselement mit der höheren Auslösetemperatur auslösen. Wurde die Grenztemperatur dagegen zwar lange Zeit erreicht, aber nicht erheblich überschritten, so lösen nur die Temperaturmesselemente mit den unterschiedlichen Wärmeleitungsstrecken aus, das Temperaturmesselement mit der höheren Auslösetemperatur hingegen nicht. Gemäß einer Ausführungsform der Erfindung weisen mindestens zwei der Wärmeleitungsstrecken unterschiedliche Temperaturleiteigenschaften auf, so dass die Wärme von dem Radlager unterschiedlich schnell zu den entsprechenden Temperaturmesselementen geleitet wird. Des Weiteren weisen vorzugsweise mindestens zwei der Temperaturmesselemente unterschiedliche Auslösetemperaturen auf, um eine Temperaturerhöhung auf eine über der Grenztemperatur liegende Temperatur nachzuweisen.

Die Erfindung wird nachfolgend anhand von bevorzugten Ausführungsformen, welche in den beiliegenden Figuren dargestellt sind, weiter beschrieben. In den Figuren zeigt:
- Fig. 1:: eine erste Ausführungsform einer erfindungsgemäßen Radlageranordnung;
- Fig. 2:: eine zweite Ausführungsform einer erfindungsgemäßen Radlageranordnung;
- Fig. 3:: eine dritte Ausführungsform einer erfindungsgemäßen Radlageranordnung;
- Fig. 4:: eine vierte Ausführungsform einer erfindungsgemäßen Radlageranordnung;
- Fig. 5:: eine fünfte Ausführungsform einer erfindungsgemäßen Radlageranordnung; und
- Fig. 6:: eine sechste Ausführungsform einer erfindungsgemäßen Radlageranordnung;

In den Figuren sind gleiche oder gleich wirkende Elemente mit denselben Bezugszeichen gekennzeichnet. Die anhand der Figuren beschriebenen Merkmale der Erfindung können grundsätzlich auch miteinander kombiniert werden.

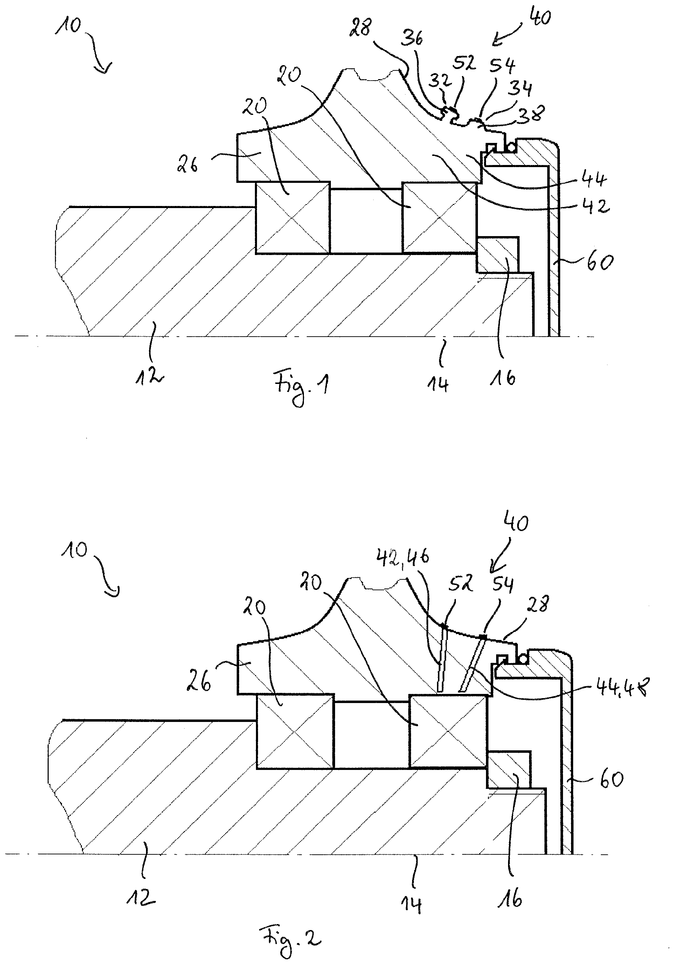

Die Figuren 1 - 6 zeigen jeweils Schnittansichten einer erfindungsgemäßen Radlageranordnung 10.

Die Radlageranordnung 10 umfasst eine Radnabe 26, welche über Radlager 20 an einem Achselement 12 drehbar gelagert ist. Die Radlager 20 sind im Inneren der Radnabe 26, zwischen dem Achselement 12 und der Radnabe 26; angeordnet. In den dargestellten Ausführungsformen umfasst die Radlageranordnung 10 zwei Radlager 20, nämlich ein links dargestelltes Innenlager und ein rechts dargestelltes Außenlager. Die Radlager 20 sind mittels einer Achsmutter 16 axial fixiert. Die Radlageranordnung 10 weist eine zentrale Rad- bzw. Längsachse 14 auf, welche eine Drehachse der Radnabe 26 bildet. An einer Stirnseite der Radlageranordnung 10 ist eine Radkappe 60 angeordnet, welche mit der Radnabe 26 derart gekoppelt ist, dass sie sich zusammen mit der Radnabe 26 dreht. Die Radkappe 60 überdeckt frontseitig die Radlager 20 sowie das zentrale, feststehende Achselement 12. Die Erfindung wird nachfolgend anhand einer Temperaturmessung bzw. Temperaturüberwachung des rechts in den Figuren dargestellten Außenlagers beschrieben. Eine Temperaturmessung des Innenlagers kann grundsätzlich in entsprechender Weise erfolgen.

Zur Überwachung bzw. Kontrolle der Temperatur des Radlagers 20 ist eine Temperaturmesseinrichtung 40 vorgesehen. Die Temperaturmesseinrichtung 40 umfasst mindestens zwei Temperaturmesselemente, nämlich ein erstes Temperaturmesselement 52 und ein zweites Temperaturmesselement 54. Die Temperaturmesselemente 52, 54 erfassen jeweils eine Temperatur an einer Temperaturmessfläche und sind dazu eingereichtet, das Erreichen oder Überschreiten einer vorbestimmten Auslösetemperatur anzuzeigen. Hierzu umfassen die Temperaturmesselemente 52, 54 jeweils eine Anzeigefläche, welche sich bei einer vorgegebenen Auslösetemperatur visuell verändert, insbesondere einen Farbwechsel vollzieht. Die Veränderung der Anzeigefläche ist irreversibel bzw. dauerhaft, das heißt sie bleibt erhalten, auch wenn die Temperatur wieder unter die Auslösetemperatur sinkt. Die Temperaturmesselemente 52, 54 sind flächig gestaltet und an einer von außen sichtbaren Oberfläche der Radlageranordnung 10 aufgebracht, insbesondere verklebt. Die Temperaturmesselemente 52, 54 sind somit bei einer routinemäßigen Überprüfung, beispielsweise einem Rundgang um das Fahrzeug, sichtbar, ohne dass Elemente der Radlageranordnung 10 demontiert werden müssen.

Ein erstes Temperaturmesselement 52 ist an einer ersten Temperaturmessfläche 32 und ein zweites Temperaturmesselement 54 ist an einer zweiten Temperaturmessfläche 34 angeordnet. Die Temperaturmesselemente 52, 54 sind dazu eingerichtet, eine Temperaturerhöhung in dem jeweils zugeordneten Radlager 20, welche einen vorgegebenen Grenzwert überschreitet, nachzuweisen. Die Temperaturmesselemente 52, 54 sind hierzu wärmeleitend mit dem Radlager 20 verbunden. Eine in dem Radlager 20 stattfindende Temperaturerhöhung führt somit durch Wärme- bzw. Temperaturleitung - verzögert und in geringerem Maße - auch in den Temperaturmesselementen 52, 54 statt. Hierbei wird Wärme entlang einer ersten Wärmeleitungsstrecke 42 von dem Radlager 20 zu dem ersten Temperaturmesselement 52 und entlang einer zweiten Wärmeleitungsstrecke 44 von dem Radlager 20 zu dem zweiten Temperaturmesselement 54 geleitet. Aufgrund einer unterschiedlich schnellen Wärme- und/oder Temperaturleitung entlang der Wärmeleitungsstrecken 42, 44 erwärmen sich die Temperaturmesselemente 52, 54 bei einer Erwärmung des Radlagers 20 unterschiedlich schnell. Hierauf basierend kann eine Aussage getroffen werden, wie lange eine überhöhte Temperatur in dem Radlager 20 vorgelegen hat. In einer alternativen Ausführungsform können die Wärmeleitungsstrecken 42, 44 auch gleiche Wärme- bzw. Temperaturleitfähigkeiten und die Temperaturmesselementen 52, 54 unterschiedliche Auslösetemperaturen aufweisen. Grundsätzlich ist auch eine Kombination unterschiedlicher Wärmeleitungsstrecken 42, 44 und unterschiedlicher Auslösetemperaturen möglich. Hierdurch kann angezeigt werden, dass eine erste Grenz- oder Auslösetemperatur über einen längeren Zeitraum überschritten wurde. Darüber hinaus kann dadurch angezeigt werden, dass eine zweite Grenz- oder Auslösetemperatur, die höher als die erste Grenz- oder Auslösetemperatur ist, - auch über einen kürzeren Zeitraum - überschritten wurde.

Bei der Ausführungsform gemäß Figur 1 sind die Temperaturmesselemente 52, 54 jeweils an einer Außenfläche bzw. Außenseite 28 der Radnabe 26 angeordnet. Die Temperaturmesselemente 52, 54 sind hierbei über das Material der Radnabe 26 wärmeleitend mit dem Radlager 20 verbunden. Das jeweils zwischen dem Radlager 20 und dem Temperaturelement 52, 54 liegende Material bildet hierbei die Wärmeleitungsstrecken 42 bzw. 44.

Bei dieser Ausführungsform kann eine zeitliche Verzögerung der Erwärmung eines der Temperaturmesselemente 52, 54 gegenüber dem anderen Temperaturmesselement beispielsweise dadurch erreicht werden, dass ein erstes Temperaturelement 52 an einem Abschnitt der Außen- bzw. Oberfläche der Radnabe 26 angeordnet ist, welcher weiter entfernt ist von dem Radlager 20 als derjenige Oberflächenabschnitt, an dem das jeweils andere, zweite Temperaturmesselement 54 angeordnet ist.

Alternativ oder zusätzlich kann eines der Temperaturmesselemente 52, 54 an der Oberfläche eines Wärmespeicherelements 36, insbesondere eines Kühlelements oder einer Kühlrippe, angeordnet sein. Das Speicherelement 36 speichert die Wärme, so dass sich das daran angeordnete Temperaturmesselement 52 langsamer erwärmt als das demgegenüber rückversetzte Temperaturmesselement 54. Das zweite Temperaturmesselement 54 ist an einem gegenüber dem Wärmespeicherelements 36 oder Kühlelement rückversetzten Bereich der Oberfläche der Radnabe 26 angeordnet, wobei dieser Bereich auch durch eine (gegenüber dem Wärmespeicherelement 36 kleinere) Erhebung 38 gebildet sein kann.

Figur 2 zeigt eine Ausführungsform mit jeweils abgegrenzten Wärmeleitelementen 46, 48 zwischen dem Radlager 20 und den Temperaturmesselementen 52, 54. Ein erstes Ende der Wärmeleitelemente 46, 48 ist dem Radlager 20 zugewandt. Ein zweites erstes Ende der Wärmeleitelemente 46, 48 ist dem jeweiligen Temperaturmesselement 52, 54 zugewandt. Um eine unterschiedlich schnelle Erwärmung der Temperaturmesselemente 52, 54 zu erreichen, können die Wärmeleitelemente 46, 48 unterschiedliche Temperaturleitkoeffizienten, unterschiedliche Längen und/oder unterschiedliche Querschnitte aufweisen. Die Wärmeleitelemente 46, 48 sind durch die Radnabe 26 hindurchgeführt, und zwar von einem Außenbereich des Radlagers 20 bis zur Außenseite 28 bzw. Oberfläche der Radnabe 26. Die Wärmeleitelemente 46, 48 weisen vorzugsweise ein anderes Material auf als die Radnabe 26. Alternativ oder zusätzlich können die Wärmeleitelemente 46, 48 gegenüber der Radnabe 26, beispielsweise durch einen Luftspalt zwischen den Wärmeleitelementen 46, 48 und der Radnabe 26, isoliert sein. Die Temperaturmesselemente 52, 54 sind vorzugsweise direkt auf dem Material der Wärmeleitelemente 46, 48 aufgebracht. Die Temperaturmessflächen 32, 34 werden also durch ein dem Radlager 20 gegenüberliegendes Ende der Wärmeleitelemente 46, 48 gebildet.

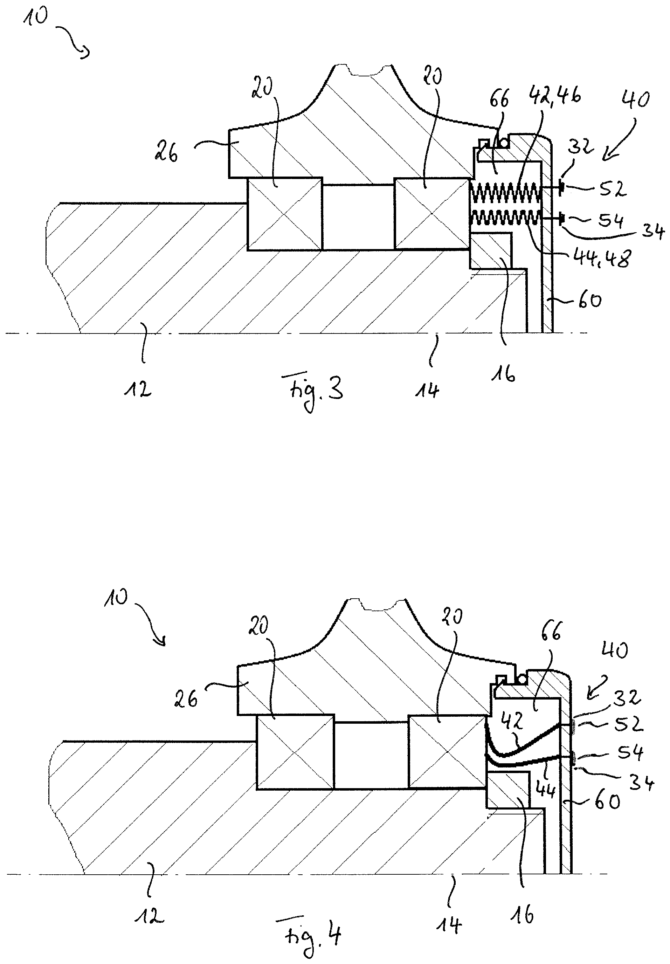

Die Figuren 3 - 5 zeigen jeweils eine Ausführungsform mit Wärmeleitelementen 46, 48, die eine in dem Radlager 20 entstehende Wärme zu einer Außenseite der Radkappe 60 leiten, wo sie durch entsprechende Temperaturmesselemente 52, 54 detektiert wird.

Die Wärmeleitelemente 46, 48 sind als Federn gestaltet, so dass unterschiedliche Abstände zwischen der Radkappe 60 und dem Radlager 20 überbrückt werden können. Die wärmeleitenden Federelemente erstrecken sich von einer Außenseite des Radlagers 20 bis zur Radkappe 60 und vorzugsweise durch diese hindurch. Die Temperaturmesselemente 52, 54 sind an einer Außenseite der Radkappe 60 angebracht und vorzugsweise wärme- und temperaturleitend mit den Federelementen verbunden. Die Federelemente sind vorzugsweise mit der Radkappe 60 verbunden und liegen im montierten Zustand der Radkappe 60 an einer Außenseite des Radlagers 20 - insbesondere dessen Lageraußenrings - an. Die Radkappe 60 kann somit in üblicher Weise von der Radnabe 26 gelöst werden, ohne dass eine separate Demontage der Temperaturmesselemente 52, 54 erforderlich ist. Zwischen dem Radlager 20 und der Radkappe verlaufen die Wärmeleitelemente 46, 48 durch einen Luftraum 66, welcher die Wärmeleitelemente 46, 48 isoliert und somit eine gezielte und gerichtete Wärme- und Temperaturübertragung entlang der Wärmeleitelemente 46, 48 gewährleistet.

Gemäß Figur 4 sind die Wärmeleitelemente 46, 48 als gebogene Federelemente oder Federringe ausgeführt. Es sind mindestens zwei Federelemente, vorzugsweise aus Metall, vorgesehen. Es können auch mehrere Federelemente in Umfangsrichtung verteilt angeordnet sein. Die Federelemente können unterschiedliche Wärme- und/oder Temperaturleitfähigkeiten aufweisen und/oder unterschiedliche Längen haben. Auch können die Wärmeleitelemente 46, 48 unterschiedliche Auslösetemperaturen aufweisen.

Bei den Ausführungsformen gemäß Figuren 2 bis 4 wird die Wärme direkt am kritischen Punkt, also am Radlager 20 - insbesondere dessen Lageraußenring - abgegriffen. Eine Temperaturerhöhung im Radlager 20 kann somit besonders präzise detektiert werden. Eine erhöhte Temperatur im Radlager 20 kann beispielsweise durch eine Wärmeentwicklung im Lager selbst, beispielsweise durch einen Defekt des Lagers, oder durch äußere Einflüsse, beispielsweise über die Bremse oder das Rad, entstehen.

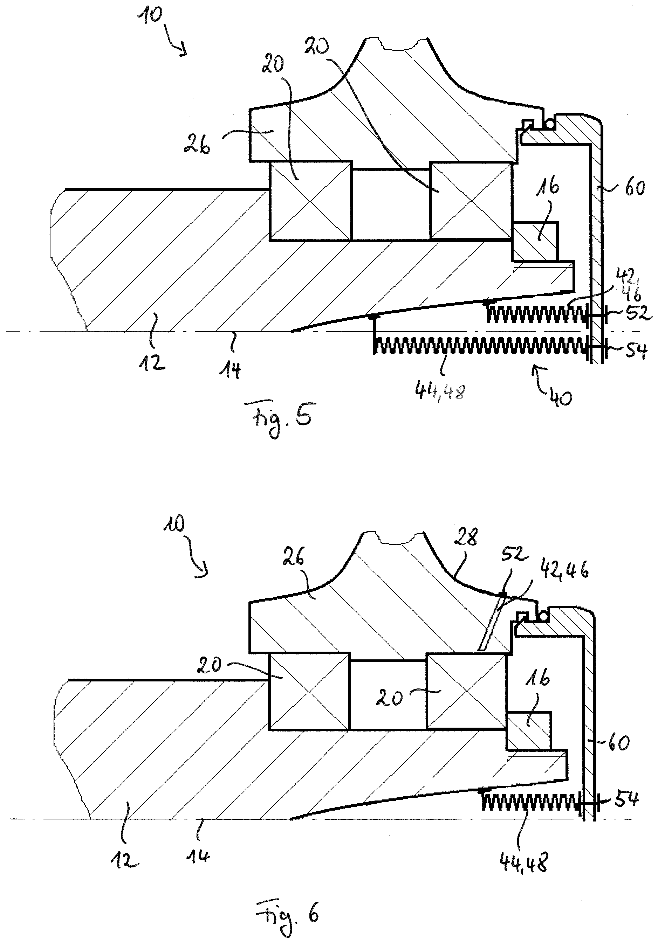

Figur 5 zeigt eine Ausführungsform einer erfindungsgemäßen Radlageranordnung 10, bei welcher die Wärmeleitelemente 46, 48 nicht direkt am Radlager 20, sondern am Achselement 12 angreifen. Die beispielsweise als Federelemente gestalteten Wärmeleitelemente 46, 48 erstrecken sich zwischen einer Oberfläche des Achselements 12 und der Radkappe 60, wobei im Kontaktbereich zur Radkappe 60 ein Schleifkontakt gebildet ist. Zur Realisierung unterschiedlicher Längen der Wärmeleitelemente 46, 48 ist in der dargestellten Ausführungsform das Achselement 12 mit einer Kavität versehen, in welche die Wärmeleitelemente 46, 48 hineinragen. Der jeweilige Kontaktpunkt mit dem Achselement 12 befindet sich an unterschiedlichen Stellen, insbesondere Axialpositionen, des Achselements 12.

Figur 6 zeigt eine Ausführungsform, bei welcher die Temperaturmesselemente 52, 54 an unterschiedlichen Elementen der Radlageranordnung 10 angeordnet sind. In dem dargestellten Ausführungsbeispiel befindet sich ein erstes Temperaturmesselement 52 an einer Oberfläche der Radnabe 26 und ein zweites Temperaturmesselement 54 an der Radkappe 60. Auf diese Weise sind automatisch unterschiedliche Wärmeleitungsstrecken 42, 44 realisiert. Am Übergang des zweiten Wärmeleitelements 48 zur Radkappe 60 ist, wie in Figur 5, ein Schleifkontakt gebildet.

Insgesamt lässt sich durch die Erfindung auf einfache und kostengünstige Weise eine Überhöhung der Temperatur in einem Radlager feststellen, wobei zusätzlich eine Information über die zeitliche Länge der Temperaturüberhöhung erhalten wird. Die Temperaturmesselemente erwärmen sich, insbesondere aufgrund unterschiedlicher Temperaturleitfähigkeiten und/oder unterschiedlicher Längen der Wärmeleitstrecken, bei einer Erwärmung des Radlagers unterschiedlich schnell und/oder weisen unterschiedliche Auslösetemperaturen auf.

### Bezugszeichenliste:

- 10: Radlageranordnung
- 12: Achselement
- 14: Radachse
- 16: Achsmutter
- 20: Radlager
- 26: Radnabe
- 28: Außenseite
- 32: erste Temperaturmessfläche
- 34: zweite Temperaturmessfläche
- 36: Kühlrippe
- 38: Erhebung
- 40: Temperaturmesseinrichtung
- 42: erste Wärmeleitungsstrecke
- 44: zweite Wärmeleitungsstrecke
- 46: erstes Wärmeleitelement
- 48: zweites Wärmeleitelement
- 52: erstes Temperaturmesselement
- 54: zweites Temperaturmesselement
- 60: Radkappe
- 66: Luftraum

## Patentansprüche

1. Radlageranordnung aufweisend
eine Radnabe (26), die über mindestens ein Radlager (20) an einem Achselement (12) gelagert ist, und
eine von außerhalb der Radlageranordnung sichtbare Temperaturmesseinrichtung (40) zur Messung und Anzeige der Überschreitung einer Grenztemperatur in dem Radlager (20),
wobei die Temperaturmesseinrichtung (40) mindestens zwei separate Temperaturmesselemente (52, 54) aufweist, welche jeweils mit dem Radlager (20) über eine Wärmeleitungsstrecke (42, 44) wärmeleitend verbunden sind und bei einer vorbestimmten Auslösetemperatur eine visuell erkennbare Veränderung vollziehen, wobei die mindestens zwei Temperaturmesselemente (52, 54) so angeordnet sind, dass sie sich bei einer Erwärmung des Radlagers (20) unterschiedlich schnell erwärmen und/oder wobei die Temperaturmesselemente (52, 54) unterschiedliche Auslösetemperaturen aufweisen, **dadurch gekennzeichnet, dass**
die Wärmeleitungsstrecken (42, 44) durch separate Wärmeleitelemente (46, 48) gebildet sind.

2. Radlageranordnung nach Anspruch 1,
wobei die Temperaturmesselemente (52, 54) eingerichtet sind, bei Erreichen ihrer jeweiligen Auslösetemperatur einen, insbesondere irreversiblen, Farbwechsel zu vollziehen.

3. Radlageranordnung nach einem der vorhergehenden Ansprüche,
wobei die Wärmeleitungsstrecken (42, 44) unterschiedliche Längen aufweisen, und wobei insbesondere eines der Temperaturmesselemente (52, 54) weiter entfernt von dem Radlager (20) positioniert ist als das andere Temperaturmesselement (52, 54).

4. Radlageranordnung nach einem der vorhergehenden Ansprüche,
wobei die Wärmeleitungsstrecken (42, 44) unterschiedliche Temperaturleitfähigkeiten aufweisen.

5. Radlageranordnung nach einem der vorhergehenden Ansprüche,
wobei die Temperaturmesselemente (52, 54) an einer Oberfläche der Radnabe (26) angeordnet sind.

6. Radlageranordnung nach einem der vorhergehenden Ansprüche,
wobei eines der Temperaturmesselemente (52, 54) an einem vorstehenden Wärmespeicherelement (36), insbesondere einem an der Radnabe (26) ausgebildeten Vorsprung, angeordnet ist.

7. Radlageranordnung nach einem der vorhergehenden Ansprüche,
wobei mindestens eines der Temperaturmesselemente (52, 54) direkt mit einem Wärmeleitelement (46, 48) verbunden ist.

8. Radlageranordnung nach einem der vorhergehenden Ansprüche,
wobei mindestens eines der Wärmeleitelemente (46, 48) ein Federelement umfasst.

9. Radlageranordnung nach einem der vorhergehenden Ansprüche,
wobei mindestens eines der Temperaturmesselemente (52, 54) im Bereich der Außenseite einer mit der Radnabe (26) lösbar verbundenen Radkappe (60) angeordnet ist.

10. Radlageranordnung nach einem der vorhergehenden Ansprüche,
wobei zumindest eine, vorzugsweise beide Wärmeleitstrecken (42, 44) durch die Radnabe (26) gebildet werden, und wobei vorzugsweise eines der Temperaturmesselemente (52, 54) weiter von dem Radlager (20) beabstandet ist als das andere Temperaturmesselement (52, 54).

11. Radlageranordnung nach einem der vorhergehenden Ansprüche,
wobei die Temperaturmesselemente (52, 54) an unterschiedlichen Elementen der Radlageranordnung angeordnet sind.

12. Radlageranordnung nach einem der vorhergehenden Ansprüche,
wobei zumindest eines der, vorzugsweise als Feder ausgebildeten Wärmeleitelemente (46, 48) zwischen dem Achselement (12) und der Radkappe (60) angeordnet ist, und wobei vorzugsweise ein Schleifkontakt zwischen dem Wärmeleitelement (46, 48) und der Radkappe (60) ausgebildet ist.

13. Radlageranordnung nach einem der vorhergehenden Ansprüche,
wobei mindestens drei Temperaturmesselemente (52, 54) und drei entsprechend zugeordnete Wärmeleitungsstrecken (42, 44) vorgesehen sind.

14. Radlageranordnung nach Anspruch 13,
wobei eine einem ersten Temperaturmesselement zugeordnete, erste Wärmeleitungsstrecke eine unterschiedliche Temperaturleiteigenschaft aufweist als eine einem zweiten Temperaturmesselement zugeordnete, zweite Wärmeleitungsstrecke, und wobei vorzugsweise ein drittes Temperaturmesselement eine unterschiedliche Auslösetemperatur aufweist als mindestens das erste oder das zweite Temperaturmesselement.

## Claims

1. A wheel bearing assembly comprising
a wheel hub (26), which is mounted on an axle element (12) by means of at least one wheel bearing (20), and
a temperature-measuring device (40), visible from outside the wheel bearing assembly, for measuring and displaying the exceeding of a limit temperature in the wheel bearing (20),
wherein the temperature-measuring device (40) comprises at least two separate temperature-measuring elements (52, 54), each of which is connected to the wheel bearing (20) in a heat-conducting manner via a heat-conducting path (42, 44) and undergoes a visually identifiable change at a predetermined trigger temperature, wherein the at least two temperature-measuring elements (52, 54) are disposed in such a way that, when the wheel bearing (20) heats up, they heat up at different rates, and/or wherein the temperature-measuring elements (52, 54) have different trigger temperatures, **characterized by**
that the heat-conducting paths (42, 44) are formed by separate heat-conducting elements (46, 48).

2. The wheel bearing assembly as claimed in claim 1,
wherein the temperature-measuring elements (52, 54) are designed for implementing a color change, which is irreversible, in particular, when its particular trigger temperature is reached.

3. The wheel bearing assembly as claimed in one of the preceding claims,
wherein the heat-conducting paths (42, 44) have different lengths, and
wherein, in particular, one of the temperature-measuring elements (52, 54) is positioned further away from the wheel bearing (20) than the other temperature-measuring element (52, 54).

4. The wheel bearing assembly as claimed in one of the preceding claims, wherein the heat-conducting paths (42, 44) have different thermometric conductivities.

5. The wheel bearing assembly as claimed in one of the preceding claims, wherein the temperature-measuring elements (52, 54) are disposed on a surface of the wheel hub (26).

6. The wheel bearing assembly as claimed in one of the preceding claims, wherein one of the temperature-measuring elements (52, 54) is disposed on a protruding heat-storage element (36), in particular on a projection formed on the wheel hub (26).

7. The wheel bearing assembly as claimed in one of the preceding claims, wherein at least one of the temperature-measuring elements (52, 54) is directly connected to a heat-conducting element (46, 48).

8. The wheel bearing assembly as claimed in one of the preceding claims, wherein at least one of the heat-conducting elements (46, 48) comprises a spring element.

9. The wheel bearing assembly as claimed in one of the preceding claims, wherein at least one of the temperature-measuring elements (52, 54) is disposed in the region of the outer side of a wheel cover (60), which is detachably connected to the wheel hub (26).

10. The wheel bearing assembly as claimed in one of the preceding claims, wherein at least one, preferably both heat-conducting paths (42, 44) are formed by the wheel hub (26), and wherein preferably one of the temperature-measuring elements (52, 54) is spaced further away from the wheel bearing (20) than the other temperature-measuring element (52, 54).

11. The wheel bearing assembly as claimed in one of the preceding claims, wherein the temperature-measuring elements (52, 54) are disposed on different elements of the wheel bearing assembly.

12. The wheel bearing assembly as claimed in one of the preceding claims, wherein at least one of the heat-conducting elements (46, 48), which are preferably designed as springs, is disposed between the axle element (12) and the wheel cover (60), and wherein preferably one sliding contact is formed between the heat-conducting element (46, 48) and the wheel cover (60).

13. The wheel bearing assembly as claimed in one of the preceding claims, wherein at least three temperature-measuring elements (52, 54) and three correspondingly assigned heat-conducting paths (42, 44) are provided.

14. The wheel bearing assembly as claimed in claim 13,
wherein a first heat-conducting path, which is assigned to a first temperature-measuring element, has a different thermal conduction property than a second heat-conducting path, which is assigned to a second temperature-measuring element, and wherein preferably a third temperature-measuring element has a different trigger temperature than at least the first or the second temperature-measuring element.

## Revendications

1. Ensemble de roulement de roue, comportant
un moyeu de roue (26) qui est monté sur un élément d'essieu (12) par au moins un roulement de roue (20),
un dispositif de mesure de température (40) visible de l'extérieur de l'ensemble de roulement de roue et destiné à mesurer et à afficher le dépassement d'une température limite dans le roulement de roue (20), dans lequel
le dispositif de mesure de température (40) comprend au moins deux éléments de mesure de température séparés (52, 54) qui sont reliés chacun au roulement de roue (20) avec conduction thermique par un trajet de conduction thermique (42, 44) et qui subissent une modification visuellement discernable à une température de déclenchement prédéterminée, lesdits au moins deux éléments de mesure de température (52, 54) étant agencés de manière à s'échauffer à des vitesses différentes lors d'un échauffement du roulement de roue (20) et/ou les éléments de mesure de température (52, 54) présentant différentes températures de déclenchement,
**caractérisé en ce que**
les trajets de conduction thermique (42, 44) sont réalisés par des éléments de conduction thermique séparés (46, 48).

2. Ensemble de roulement de roue selon la revendication 1,
dans lequel les éléments de mesure de température (52, 54) sont conçus pour subir un changement de couleur en particulier irréversible lorsqu'ils atteignent leur température de déclenchement respective.

3. Ensemble de roulement de roue selon l'une des revendications précédentes,
dans lequel les trajets de conduction thermique (42, 44) présentent différentes longueurs, et en particulier l'un des éléments de mesure de température (52, 54) est positionné plus loin du roulement de roue (20) que l'autre élément de mesure de température (52, 54).

4. Ensemble de roulement de roue selon l'une des revendications précédentes,
dans lequel
les trajets de conduction thermique (42, 44) présentent différentes conductivités thermiques.

5. Ensemble de roulement de roue selon l'une des revendications précédentes,
dans lequel
les éléments de mesure de température (52, 54) sont agencés sur une surface du moyeu de roue (26).

6. Ensemble de roulement de roue selon l'une des revendications précédentes,
dans lequel
l'un des éléments de mesure de température (52, 54) est agencé sur un élément d'accumulation thermique (36) en saillie, en particulier sur une saillie réalisée sur le moyeu de roue (26).

7. Ensemble de roulement de roue selon l'une des revendications précédentes,
dans lequel
l'un au moins des éléments de mesure de température (52, 54) est relié directement à un élément conducteur de chaleur (46, 48).

8. Ensemble de roulement de roue selon l'une des revendications précédentes,
dans lequel
l'un au moins des éléments conducteurs de chaleur (46, 48) comprend un élément ressort.

9. Ensemble de roulement de roue selon l'une des revendications précédentes,
dans lequel
l'un au moins des éléments de mesure de température (52, 54) est agencé dans la zone du côté extérieur d'un enjoliveur de roue (60) relié de façon détachable au moyeu de roue (26).

10. Ensemble de roulement de roue selon l'une des revendications précédentes,
dans lequel
au moins un, de préférence deux trajets de conduction thermique (42, 44) sont formés par le moyeu de roue (26), et de préférence l'un des éléments de mesure de température (52, 54) est espacé plus loin du roulement de roue (20) que l'autre élément de mesure de température (52, 54).

11. Ensemble de roulement de roue selon l'une des revendications précédentes,
dans lequel
les éléments de mesure de roue (52, 54) sont agencés sur différents éléments de l'ensemble de roulement de roue.

12. Ensemble de roulement de roue selon l'une des revendications précédentes,
dans lequel
l'un au moins des éléments conducteurs de chaleur (46, 48) réalisés de préférence sous forme de ressort est agencé entre l'élément d'essieu (12) et l'enjoliveur de roue (60), et de préférence un contact frottant est réalisé entre l'élément conducteur de chaleur (46, 48) et l'enjoliveur de roue (60).

13. Ensemble de roulement de roue selon l'une des revendications précédentes,
dans lequel
il est prévu au moins trois éléments de mesure de température (52, 54) et trois trajets de conduction thermique (42, 44) associés en correspondance.

14. Ensemble de roulement de roue selon la revendication 13,
dans lequel
un premier trajet de conduction thermique associé à un premier élément de mesure de température présente une propriété de conduction thermique différente de celle d'un second trajet de conduction thermique associé à un second élément de mesure de température, et de préférence un troisième élément de mesure de température présente une température de déclenchement différente de celle dudit au moins un premier ou second élément de mesure de température.
